# EUROPEAN PATENT APPLICATION

(11) **EP 0 667 576 A1**
(43) Date of publication of application: **16.08.1995**
(21) Application number: 95101798.7
(22) Date of filing: 09.02.1995
(51) Int. Cl.: G06F 11/00

(54) **A data processor and a trace circuit using the data processor**

(30) Priority: 09.02.1994 JP 36496/94; 30.09.1994 JP 259727/94
(71) Applicant: HITACHI, LTD., Chiyoda-ku, Tokyo 100 (JP); HITACHI MICROCOMPUTER SYSTEM LTD., Kodaira-shi, Tokyo (JP)
(72) Inventor: Fujita, Shuya, Tokyo (JP); Aoto, Yoshikazu, Tokyo (JP); Hasegawa, Atsushi, Tokyo (JP); Koyama, Hideaki, Tokyo (JP); Sugihara, Noboru, Tokyo (JP); Kawasaki, Shumpei, Palo Alto, California 94306 (US)
(74) Representative: Strehl Schübel-Hopf Groening & Partner

(57) **Abstract**

A data processor (1) formed on a single chip comprises a central processor (10), a cache memory (30) and an external bus interface (70) including a bus controller (71). When an access to the cache memory (30) results in a cache hit, access information such as cache hit-related address and data are given to the external bus interface (70). In synchronism with the external output of a plurality of access information associated with the cache hit, the external bus interface (70) outputs to the outside a trace start signal representing the timing when the plurality of access information are established outside in parallel.

## Description

### BACKGROUND OF THE INVENTION

The present invention relates to a data processor incorporating a cache memory device and more particularly to a data processor that makes it possible to output access information on cache hit and timing information for tracing the access information. This invention also relates to a trace circuit that uses the data processor. The technology concerned is suitably applied, for example, to a single chip microcomputer whose mode can be switched between an evaluation chip for emulation and an actual product chip.

In program debugging and system evaluation using an emulator, it is very advantageous to be able to keep track of the sequence of program execution. A debugger such as an emulator supports system debugging and program debugging by tracing various bus information such as address, data and control signals output to the outside of the data processor and later analyzing these traced bus information. When such a data processor incorporates a cache memory device, a central processing unit can gain necessary information without having to output access information on cache hit to the outside. In debugging, however, simply tracing the information output to the outside of the data processor cannot fully keep track of the sequence of program execution. Example literatures describing a data processor incorporating a cache memory include the Nikkei Electronics (No. 577 issued on March 29, 1993), page 121, published by Nikkei BP.

Among the technologies considering the tracing of access information on cache hit are: a microprocessor with a built-in cache memory which outputs data and an address from the cache memory when a cache hit occurs during a read operation (Japanese Patent Laid-Open No. 134892/1993); a data processor with a built-in cache memory which outputs a hit signal, an address and data to the outside (Japanese Patent Laid-Open No. 208139/1991); and a microprocessor with a built-in cache memory that outputs an access request to cache memory, an address and a hit signal to the outside (Japanese Patent Laid-Open No.58552/1988).

The inventor of this invention made a further study to facilitate tracing the access information on cache hit. That is, in tracing information output by the data processor on address bus, data bus and control bus, these information must be traced in each bus cycle at timings of enabled state of each bus. For example, when reading memory from an address 100, the address information for address 100 is enabled on the address bus and at the same time a read signal representing a read status is enabled on the control bus. After this, on the data bus, the read data at address 100 is enabled. Tracing requires retrieving an address 100 on the address bus, a read status on the control bus and memory data at address 100 on the data bus, respectively. Of these bus contents, however, there are some bus information that are not enabled simultaneously, with some bus information becoming enabled earlier than another, or with some bus information disabled while other bus information are enabled. Hence, a device for keeping track of the sequence of program execution needs to have a complex circuit which, by using a variety of strobe signals and timing signals, determines for each mode of bus access a timing when all the information to be traced become enabled. Such a circuit for tracing is generally provided for each kind of data processor by the user of the data processor. Not only is this a great burden for the user but there is also a need for data processor manufacturers to facilitate the tracing as part of an effort to improve the debugging environment to deal with enhanced functions of the data processor.

### SUMMARY OF THE INVENTION

An object of this invention is to provide a data processor which allows address and data associated with cache hit to be traced outside the data processor and which also makes it possible to easily recognize the trace timing from outside. Another object of this invention is to provide a trace circuit which facilitates tracing of a variety of trace information including address and data associated with cache hit.

These and other objects and novel features of this invention will become apparent from the following descriptions in this specification and the attached drawings.

Representative aspects of this invention may be briefly summarized as follows.
[1] A cache controller (32) is adopted, which, also when an access to the built-in cache memory device by the central processing unit results in a cache hit, gives to an external bus interface a first signal ( 114) that causes access information such as the cache hit-related address and data to be output to the outside. Further, a bus controller (71) is adopted, which, in synchronism with the external output of the plurality of access information associated with the cache hit, outputs to the outside a second signal (123) representing a timing when the plurality of access information are parallelly established.
[2] When considering facilitating the tracing of all access information including the cache hit-related access information, the bus controller further outputs to the outside the second signal also at a timing when the plurality of access information that it must input and output, as well as the cache hit-related access information, are parallelly established outside.
[3] In more concrete terms, a data processor is formed in a single chip and comprises a central processing unit (10), a cache memory device (30) connected to the central processing unit through a cache bus (CB), and an external bus interface (70) connected to the cache memory device through an internal bus (IB). In this configuration, the central processing unit gives to the cache memory device a cache bus access signal (102) representing an access-through-the-cache-bus request; the cache memory device, in response to its access request, gives to the central processing unit a cache bus ready signal (103) representing the output of read data or input of write data; the cache memory device gives to the external bus interface an internal bus access signal (112) or a first signal (114) representing an access-through-the-internal-bus request; and the external bus interface, in response to its access request, gives to the cache memory device an internal bus ready signal (113) representing the output of read data or input of write data. Then, the cache memory device, when the access requested by the cache bus access signal results in a cache hit, gives the first signal ( 114) to the external bus interface to request external output of the plurality of cache hit-related access addresses and data. The external bus interface outputs to the outside a second signal (123) which commonly represents a timing when external outputs of the cache hit-related access address and data specified by the first signal are parallelly established and also a timing when external outputs of access address and data associated with other access requests specified by the internal bus access signal are parallelly established.
[4] To deal with applications where various output functions to facilitate tracing, such as output to the outside of access information associated with cache hit and of the second signal, may temporarily become an impediment to system debugging or program debugging, a mode setting means is adopted which generates a third signal (142) to selectively inhibit external output of the plurality of cache hit-related access information and external output of the plurality of access information used when accessing the built-in circuit module. Further, to allow the data processor to be switched in the mode of use between an evaluation chip for emulation and a product chip, the mode setting means may preferably be formed in such a way that, when an external signal (143) is set to a first state, the mode setting means decides whether or not to inhibit the external output of the access information according to the data set by a memory means (90) accessible by the central processing unit. For example, when the external signal is in the first state, the external bus interface is set to a debug mode to make the data processor conform to the evaluation chip for emulation; and when the external signal is in other than the first state, the external bus interface is set to a normal mode to make the data processor conform to the product chip.
[5] The trace circuit comprises the data processor incorporating the cache controller and bus controller. The external bus interface of the data processor is connected with an external bus (120, 121). The trace circuit also includes a trace memory (4) for storing information appearing on the external bus, and a timing generation circuit (5, 6) which stores the access information appearing on the external bus into the trace memory according to the second signal output from the data processor.

According to the above-mentioned means [1], the cache controller enables external output of the access information associated with cache hit in the cache memory device, which is incorporated in the data processor. The bus controller allows the trace timing of the plurality of the cache hit-related access information to be easily recognizable outside by the second signal. Further, the bus controller in the above-mentioned means [2] and [3] makes easily recognizable outside by the second signal the trace timing of the plurality of access information in each bus cycle that the external bus interface inputs and outputs.

The mode setting means in the above means [4] makes it possible to deal properly with applications where various output functions to facilitate tracing, such as output to the outside of access information associated with cache hit and of the second signal, may temporarily become an impediment to system debugging or program debugging. It also makes it possible to switch the mode of use of the data processor chip between the evaluation chip for emulation and the product chip.

In the trace circuit of the above means [5], the timing generation circuit can obtain, by the second signal without referencing various strobe signals, the timing when the plurality of access information in each bus cycle are parallelly established. The timing generation circuit generates a trace timing for the trace memory in synchronism with a data processor operation cycle signal or with a signal out of phase with the operation cycle signal.

### BRIEF DESCRIPTION OF THE DRAWINGS

Figure 1 is a block diagram of a microcomputer as one embodiment of this invention;
Figure 2 is a block diagram showing one example of a cache memory device;
Figure 3 is a circuitry showing one example of a logic circuit in a cache controller 32 for generating a cache bus ready signal;
Figure 4 is a block diagram showing an external bus interface;
Figure 5 is a circuitry showing one example of a logic circuit in the bus controller for generating a trace start signal;
Figure 6 is a timing chart showing one example of cache read hit and write access in the normal mode;
Figure 7 is a timing chart showing one example of cache read hit and write access in the debug mode when a trace support function is selected;
Figure 8 is a block diagram showing one example of a trace circuit for tracing by using a trace start signal output from the microcomputer;
Figure 9 is a timing chart showing one example of tracing operation as performed by the trace circuit;
Figure 10 is a timing chart showing an access timing in the event of a cache read mis-hit in the normal mode;
Figure 11 is an explanatory diagram showing one example of a pipeline stage in the microcomputer of this embodiment;
Figure 12(A) and Figure 12(B) are explanatory diagrams showing example implementations of address transfer and data transfer in a memory access stage in a pipeline;
Figure 13 is a circuitry showing an example configuration of a control logic using a status transition control in the cache controller;
Figure 14 is an explanatory diagram showing truth values in a first combined circuit of Figure 13;
Figure 15 is an explanatory diagram showing truth values in a second combined circuit of Figure 13;
Figure 16 is a diagram showing the transition of status indicated by the status signal of Figure 13;
Figure 17 is a circuitry showing an example configuration of a control logic using a status transition control in the bus controller;
Figure 18 is an explanatory diagram showing truth values in a second combined circuit of Figure 17;
Figure 19 is an explanatory diagram showing a part of truth values in a first combined circuit of Figure 17;
Figure 20 is an explanatory diagram showing the remainder of truth values in the first combined circuit of Figure 17;
Figure 21 is a diagram showing the transition of status indicated by the status signal of Figure 17;

### DESCRIPTION OF THE PREFERRED EMBODIMENTS

### ((Module Configuration of Microcomputer))

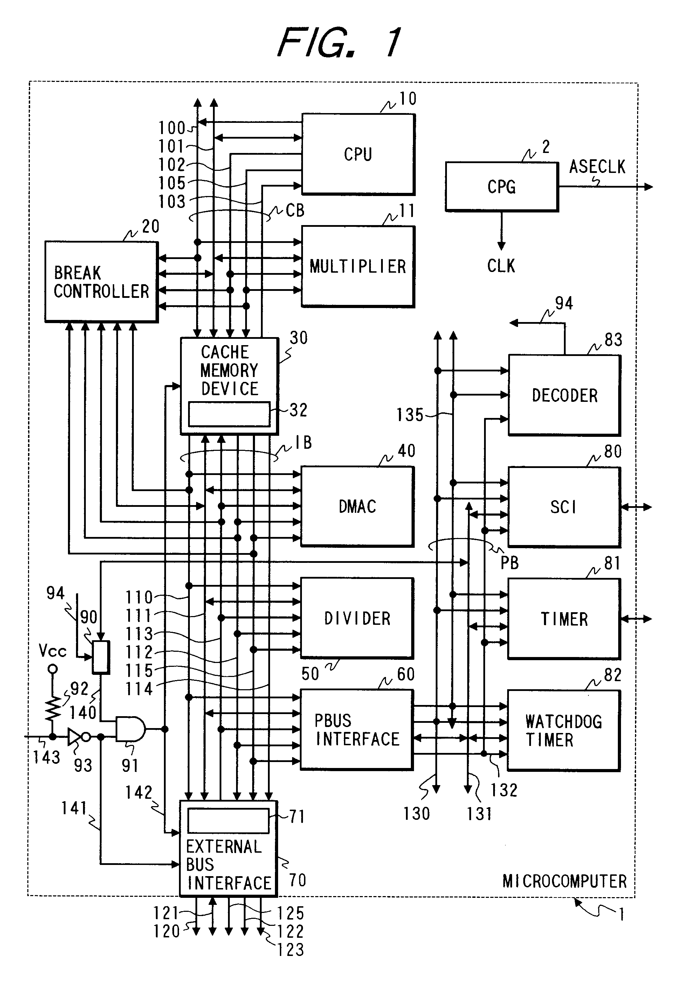

Figure 1 shows a block diagram of a microcomputer as one embodiment of this invention. The microcomputer 1 shown in the figure may, for example, be formed in a single semiconductor substrate of monocrystalline silicon by a known semiconductor integrated circuit fabrication technique.

This microcomputer 1 has a three-bus configuration comprising, but not limited to, a cache bus CB, an internal bus IB, and a peripheral bus PB. The cache bus CB comprises a cache address bus 100, a cache data bus 101, and a cache control bus represented by a cache bus access signal 102, a cache bus ready signal 103 and a cache bus read/write signal 105. These buses are connected to a central processing unit (hereinafter referred to simply as CPU) 10, a multiplier 11, a break controller 20 and a cache memory device 30. The break controller 20 monitors information on the cache bus CB and the internal bus IB and, when they agree with the preset break condition, produces a break interrupt to the CPU 10 so that the instruction execution by the CPU 10 can be stopped at a desired point.

The internal bus IB comprises an internal address bus 110, an internal data bus 111, and an internal control bus represented by an internal bus access signal 112, an internal bus ready signal 113, a cache trace signal 114 and an internal bus read/write signal 115. These internal buses are connected to the break controller 20, the cache memory device 30, a direct memory access controller (hereinafter referred to simply as DMAC) 40, a divider 50, a peripheral bus interface 60 and an external bus interface 70. The cache trace signal 114 is supplied from the cache memory device 30 to the external bus interface 70.

The peripheral bus PB comprises a peripheral address bus 130, a peripheral data bus 131, and peripheral control bus represented by a peripheral bus access signal 132 and a peripheral bus read/write signal 135. These peripheral buses are connected to the peripheral bus interface 60, serial interface 80, timer 81, and watchdog timer 82.

The external bus interface 70 is connected to an external bus which comprises an external address bus 120, an external data bus 121, and an external control bus represented by an external bus access signal 122, a trace start signal (hereinafter referred to simply as a TS signal) 123 and an external bus read/write signal 125. In this embodiment, various control signals are at an active level when they are high. For easy reading of drawing, buses are represented by single lines though each of them actually comprises a plurality of lines.

The cache data bus 101 and the internal data bus 111 are 32 bits (four bytes) wide. The cache memory device 30 may have the data capacity of 16 bytes for each entry. Therefore, the entry replacement in the cache memory device 30 is performed 16 bytes at a time. In other words, indexing of the cache memory device 30 is carried out 16 bytes at a time. This cache memory device 30 maintains data alignment with external memory not shown by a write-through control, so that during the write access by the CPU 10, the external bus cycle is initiated whether the access results in a cache mis-hit or cache hit.

The microcomputer 1 of this embodiment is operated in synchronism with the clock signal CLK generated by a clock pulse generator (hereinafter referred to as CPG) 2. Signals of the cache bus CB and the internal bus IB are changed in synchronism with the low-to-high transition of the clock signal CLK, and signals to be output to the outside of the chip are changed in synchronism with the high-to-low transition of the clock signal CLK.

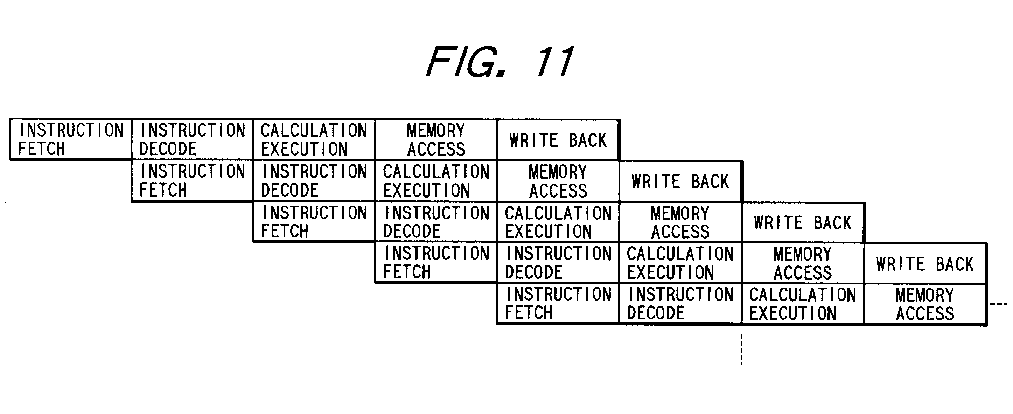

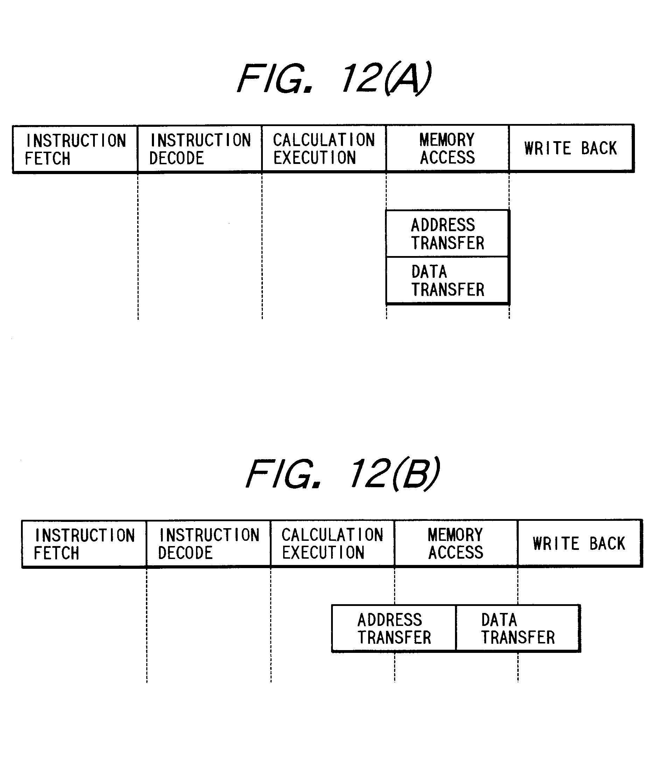

The CPU 10 may have RISC instruction sets and executes them in a pipeline control scheme. For example, as shown in Figure 11, the CPU 10 has five pipeline stages, such as instruction fetch, instruction decode, calculation execution of, say, effective address and memory access, and write back. A general pipeline control scheme is performed as shown in Figure 12(A). During the memory access stage, the address transfer and the data transfer can be executed at the same time. That is, in the read cycle, the address calculated during the calculation execution stage is output from the CPU and the corresponding read data is entered from outside into CPU. The data thus entered is written into a register during the write back stage. In the write cycle, at the same time that the address calculated during the calculation execution stage is output, data read out from the register is output onto the data bus as write data. The CPU 10 of this embodiment also performs the memory access stage in a two-stage pipeline control scheme consisting of address transfer stage and data transfer stage, as shown in Figure 12(B). Each of the stages of the CPU 10 is controlled as one stage beginning with the rising edge of a clock signal and ending with the falling edge of the next clock signal. The address calculated by the calculation execution stage is output onto the cache address bus 100 together with a command representing a kind of memory access during the address transfer stage, which is a half cycle after the start of the calculation execution stage. For example, data read out from the cache memory device 30 is given to the cache data bus 101 during the data transfer stage a half cycle after the start of the memory access stage. If the next instruction demands a memory access, the address transfer stage of the next instruction is initiated simultaneously with the data transfer stage of the previous instruction. In this way, the memory access is also done in a way similar to the pipelining. Because the calculation of access address and data writing into register can be executed in a short time compared with the memory access, the control of the memory access like a pipelining as in this embodiment can secure a memory access time of about two cycles. In other words, without degrading the data processing performance, it is possible to use low-speed cache memory and built-in memory.

### ((Operation Mode of Microcomputer))

The microcomputer 1 of this embodiment has a debug mode whereby the microcomputer as a so-called evaluation chip is used as an emulation microcomputer, and a normal mode whereby it is used as a product chip. Such operation modes are determined by the level of a signal 143. The signal 143 is pulled up to the power supply voltage Vcc through a resistor 92 inside the chip, and its high level specifies the normal mode. Therefore, when the microcomputer 1 is to be operated in the normal mode, the wire of the. signal 143 need be fixed to high level or left floating. Generally, the product chip used in the normal mode and the evaluation chip used in the debug mode are often sealed in different packages. When the microcomputer 1 of this embodiment is to be used as a product chip, the wire of the signal 143 is, for example, not connected to the external terminal of the package and is fixed to a high level during the wire bonding process in the manufacture. The signal 143 is inverted by an inverter 93 to form an internal signal 141, which is supplied to the external bus interface 70 so as to allow higher order bits of the address signal, which is not output to the outside during the normal mode, to be output to the outside, thus supporting debugging.

Further, the microcomputer 1 of this embodiment has a trace support function, which, when a debug mode is set, allows the information on the internal bus IB and cache bus CB to be easily traced outside. At time of cache hit in the cache memory device 30, this function which is detailed later permits access information such as address and data associated with the cache hit to be output parallelly for only one cycle from the external bus interface 70 via a plurality of external terminals (not shown) provided in the microcomputer 1. Normally, at time of cache hit, there is no need for external memory access and thus an external bus can be used for outputting the data and address associated with the cache hit to the outside so that they can be traced. Further, access information on the peripheral bus PB for the peripheral circuit module is also output to the outside for tracing. To make it possible to easily determine the trace timing for these information and the information on the original external access using external bus, the trace start signal 123 is output as a signal to tell the timing for initiating the trace in synchronism with the timing when each of these information is established. To make such a trace support function selectable, an AND gate 91 is provided which takes in two inputs-an output signal 140 of the register 90 that can be read and written by the CPU 10 and the internal signal 141-with an output signal 142 (third signal) of the AND gate 91 connected to the cache memory device 30 and external bus interface 70. When the output signal 142 is held high by setting the debug mode and setting data of logic value 1 in the register 90, the trace support function is invoked. The register 90 is connected to the peripheral data bus 131 and is selected by a register selection signal 94 from a decoder 83 that decodes the address on the peripheral address bus 130. The register selection signal 94 includes information for specifying the read/write operation.

### ((Outline of Access Control by Microcomputer))

The CPU 10 accesses the cache bus CB, internal bus IB, peripheral bus PB and external bus according to the state of the cache hit/mis-hit in the cache memory device 30 and to the address being accessed. At this time, the cache controller 32 contained in the cache memory device 30 performs an interface control between the cache bus CB and the internal bus IB (and peripheral bus PB). The bus controller 71 contained in the external bus interface 70 performs an interface control between the internal bus IB and the external bus. In the CPU 10, which is a main circuit module to perform access control and bus control (an upstream module for giving access instructions), the cache controller 32, and the bus controller 71 (a downstream module for giving access instructions), a request for an upstream-to-downstream access is made by the cache bus access signal 102 (from CPU 10 to cache controller 32) and the internal bus access signal 112 (from cache controller 32 to bus controller 71). When the access signals 102, 112 are held at an active level (high level), the address signals required for that access are also supplied to the downstream circuit. The request acceptance state of the downstream circuit module that has accepted the access request (output of read data for the read access request; input of write data for the write access request) is notified to the upstream circuit module by the internal bus ready signal 113 (from bus controller 71 to cache controller 32) and the cache bus ready signal 103 (from cache controller 32 to CPU 10), both ready signals serving as response signals. The circuit modules that receive these ready signals 103, 113 change the present bus state when the ready signals 103, 113 are at active level and, when they are at inactive level, do not make another access request but maintain the current bus access control status.

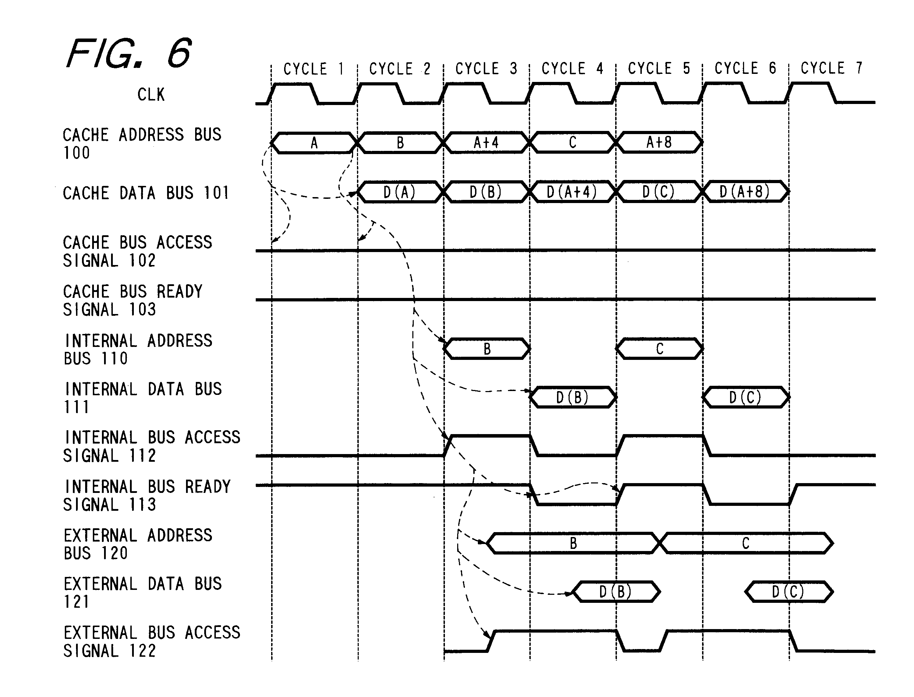

For example, in Figure 6 showing the bus access timing in the normal mode, the access by the CPU 10 is successively performed in a series of cycles-cycle 1 (read cycle for address A, cache hit), cycle 2 (write cycle for address B), cycle 3 (read cycle for address A+4, cache hit), and cycle 4 (write cycle for address C). The write cycles for address B and C constitute external memory accesses. The external bus cycle basically consists of two cycles of clock signal CLK and data is established at the second half of the bus cycle. Because the internal bus ready signal 113 is high in cycle 3, the cache controller 32 holds the internal bus access signal 112 high and outputs the address B onto the internal address bus 110 in cycle 3 and, during cycle 4, outputs write data D(B) onto the internal data bus. In response to the internal bus access signal 112 which was held high in cycle 3, the bus controller 71 holds the external bus access signal 122 high to start the external write cycle for writing data D(B) into the address B. Because the external bus cycle requires two cycles of clock signal CLK, the bus controller 71 during cycle 4 negates the internal bus ready signal 113 to low level. The cache controller 32 holds the internal bus access signal 112 low during the low level period of the internal bus ready signal 113 - (cycle 4) and does not make a new bus request and, during cycle 5, holds the internal bus access signal 112 high to make a write request for the next address C. When the external bus cycle requires three or more cycles of the clock signal CLK because of a wait request, for instance, the negate period of the internal bus ready signal 113 is extended (i.e., the high-level assert timing of the internal bus access signal 112 is delayed). During that period the states of the internal address bus 110 and the internal data bus 111 are maintained. After this, the external bus access for the address C is initiated.

When the debug mode is set and the trace support function is selected in addition to the bus control based on the access signals 102, 112 and the ready signals 103, 113, the cache trace signal 114 and the trace start signal 123 are enabled. When the trace support function is selected, an access request is made to the bus controller 71 by the cache trace signal 114 in order to output the access information associated with cache hit to the outside. Thus, when the access information associated with the cache hit is output to the outside, the internal bus access signal 112 is not asserted and its function is taken over by the cache trace signal 114. The information that the bus controller 71 has specially to output to the outside in the trace support function includes information on accesses made only within the microcomputer 1 in the normal mode, such as access information associated with cache hit. The trace start signal 123 gives a trace timing when these information are established at the outside. Therefore, in generating the signal 123, the bus controller 71 considers the access request by the cache trace signal 114 when outputting information associated with cache hit and, when making other external bus accesses, considers an access request by the internal bus access signal 112.

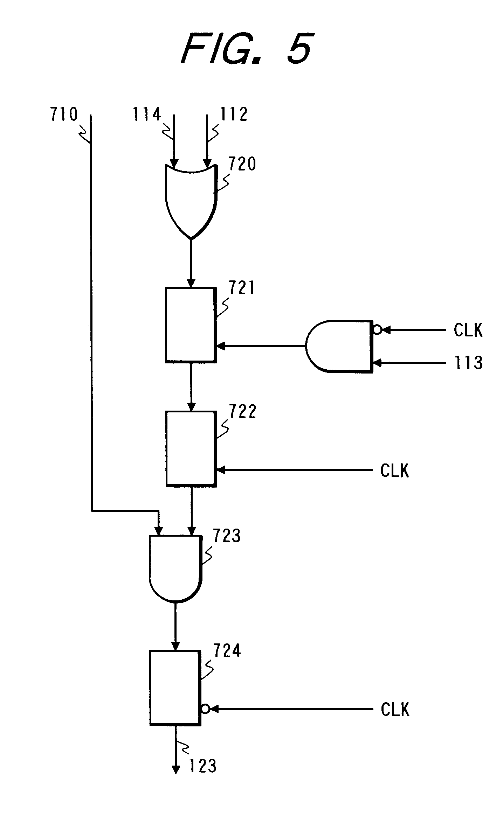

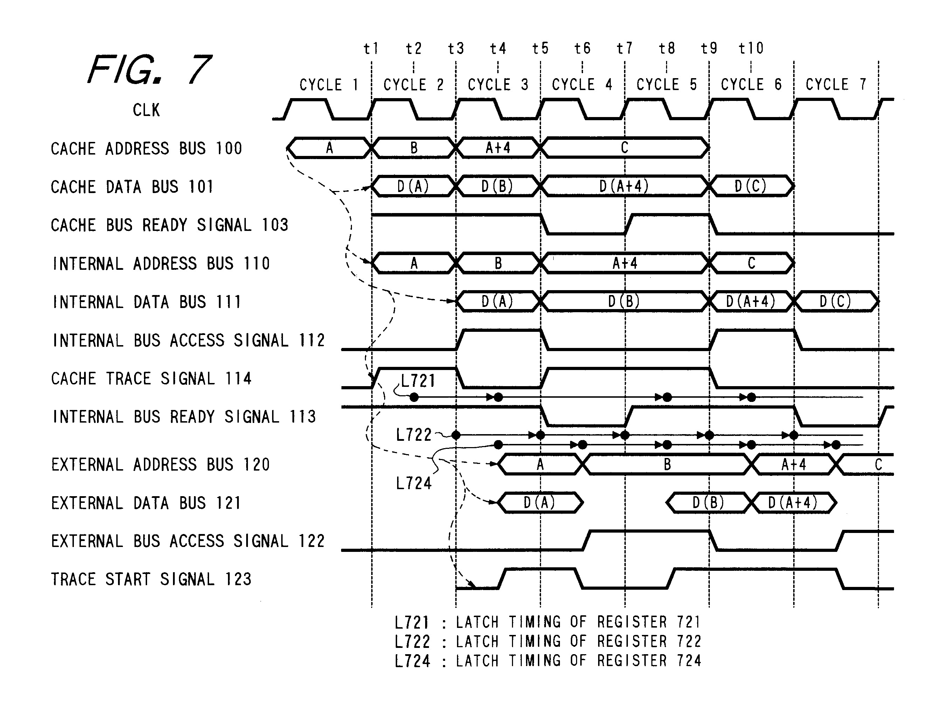

In reference to Figure 7 showing the bus access timing with the trace support function selected in the debug mode, the access by the CPU 10 is successively performed in a series of cycles-cycle 1 (read cycle for address A, cache hit), cycle 2 (write cycle for address B), cycle 3 (read cycle for address A+4, cache hit), and cycle 4 (write cycle for address C). The write cycles for address B and C constitute external memory accesses. The external bus cycle basically consists of two cycles of clock signal CLK and data is established at the second half of the bus cycle. When a cache hit for read access to address A is detected, the cache controller 32 holds the cache trace signal 114 high in cycle 2. In response to this, the bus controller 71 outputs the address A and data D(A) associated with the cache hit onto the external bus. At this time, their output timing by the cache controller 32 is 1.5 cycles of clock signal CLK after time t when the internal bus ready signal 113 and cache trace signal 114 go high. In this external bus cycle, the address and data are parallelly output during the second one cycle of the normal external bus cycle (two cycles of clock signal CLK). This external bus access overlaps the access request on the internal bus for address B in cycle 3, so that the internal bus ready signal 113 is negated to low level in cycle 4. The cache controller 32 that receives the low-level internal bus ready signal 113 retains the internal bus state in that period. The external write cycle for address B requested by the internal bus access signal 112 in cycle 3 is started after the external bus cycle for address A and data D(A) is finished. The trace start signal 123 is held high in synchronism with the timing when the data D(A), D-(A+4) associated with cache hit and write data D-(B) are output onto the external data bus (also the timing when the corresponding access address is established). One example theory of how the trace start signal 123 is generated will be detailed later by referring to Figure 5.

### ((Cache Memory Device))

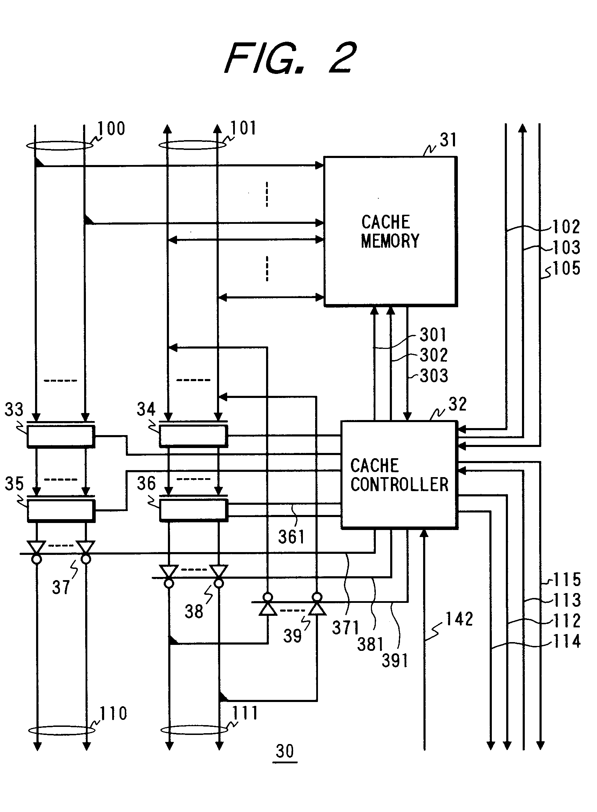

Figure 2 shows an example block diagram of the cache memory device 30. The cache memory device 30 shown in the figure comprises: an n-way set associative cache memory 31 having a cache entry made up of a data section and a tag section; registers 33-36 and three-state buffers 37-39 disposed between the cache address bus 100 and cache data bus 101 on the cache bus CB side and the internal address bus 110 and internal data bus 111 on the internal bus IB side; and a cache controller 32 for controlling these.

On the cache bus CB side, the cache controller 32 inputs a cache bus access signal 102 and a cache bus read/write signal 105 and outputs a cache bus ready signal 103. On the internal bus IB side, it receives a internal bus ready signal 113 and outputs an internal bus access signal 112, a cache trace signal 114 and an internal bus read/write signal 115. When the signal 142 is high, the cache controller 32 controls the tristate buffer 37, 38 so that also when the access to the cache memory device 30 by the CPU 10 results in a cache hit, access information such as address and data associated with the cache hit are given to the external bus interface 70. The cache controller 32 further supplies the cache trace signal 114 (first signal) at active level to the external bus interface 70 to instruct it to output the data and address associated with the cache hit to the external circuit.

The cache memory 31 is connected directly to the cache address bus 100 and cache data bus 101, and its read operation and write operation are controlled by the cache controller 32 via a read signal 301 and a write signal 302. When it receives an access request from the CPU 10 via the high-level cache bus access signal 102, the cache controller 32 holds the read signal 301 high to cause the cache memory 31 to search for data corresponding to the address on the cache address bus 100. When an entry corresponding to the address exists (cache hit), a hit signal 303 is raised to high level. When no corresponding entry exists (cache mis-hit), the hit signal 303 is held low. The high or low hit signal 303 is then given to the cache controller 32. The cache address bus 100 is connected to the internal address bus 110 through the registers 33, 35 and three-state buffer 37. The values of the cache data bus 101 are output to the internal data bus 111 through the registers 34, 36 and three-state buffer 38. Conversely, the values of the internal data bus 111 are output to the cache data bus 101 through the three-state buffer 39. The registers 33, 34 perform the latch operation at the falling edge of the clock signal CLK according to the control from the cache controller 32, while the registers 35, 36 perform the latch operation at the rising edge of the clock signal CLK. The three-state buffers 37-39 are controlled by the cache controller 32. In the read cycle during the internal bus access the three-state buffer 39 is made operable for input and output, and in the write cycle the three-state buffer 38 is made operable. The registers 33-36 are provided to produce a delay time of one cycle of clock signal CLK in the information transfer between the cache bus CB and the internal bus IB. That is, as representatively shown in Figure 6 and 7, when information on the cache data bus 101 and cache address bus 100 are changed, the change is reflected one cycle of clock signal CLK later on the internal data bus 111 and internal address bus 110.

During the read cycle of the CPU 10 the search on the cache memory 31 is performed in one cycle of clock signal CLK, and the cache controller 32 decides if the internal bus cycle should be started depending on whether data corresponding to the access address exists in the cache memory 31. When the cache controller 32 recognizes through the hit signal 303 the presence of the corresponding data in the cache memory 31, it outputs the data read from the cache memory 31 onto the cache data bus 101 and holds the cache bus ready signal 103 high to notify the CPU 10 of the completion of the data read operation. When the corresponding data does not exist, the cache controller 32 puts the address on the internal address bus 110 through the three-state buffer 37 and at the same time holds the internal bus access signal 112 high to request the bus controller 71 to start the bus cycle. The internal bus cycle is terminated by recognizing the active level of the internal bus ready signal 113 returned from the external bus interface 70. Upon recognizing it, the cache controller 32 sends the data to the CPU 10 through the three-state buffer 39 and at the same time raises the cache bus ready signal 103 and the write signal 302 to active level to write the data as a new entry into the cache memory 31. In Figure 2, reference numeral 361 represents addition input data for the register 36 which is address information used to take in the 16-byte data section of the entry in the event of cache mis-hit. That is, the data section of one cache entry is 16 bytes, the data access is performed 32 bits (4 bytes) at a time, and the address is a byte address, so that the addition input data 361 represents information used to arbitrarily change third and fourth bit from the least significant bit of the address bits in the register 36. This addition input data 361 is used to generate addresses for four accesses (4 bytes each) to take in a total of consecutive 16 bytes of data associated with the cache mis-hit.

In the write cycle of the CPU 10, the cache controller 32 performs a write-through control by supplying the address and data to the internal address bus 110 and internal data bus 111, too, whether or not the specified data exists in the cache memory 31.

When the trace support function is selected and the signal 142 is set high, the address and data are output onto the internal bus IB through the three-state buffers 37, 38 in the read cycle also in the event of cache hit. At this time, the cache controller 32 raises the cache trace signal 114 to active level, rather than holding the internal bus access signal 112 to active level, to inform the external bus interface 70 that the data output is for tracing.

When the internal bus ready signal 113 is at inactive low level indicating that the internal bus IB has not yet completed the previous access, the cache controller 32 can maintain the output status for the internal bus IB by not performing latch operation on the registers 33, 34 and by holding the previous value.

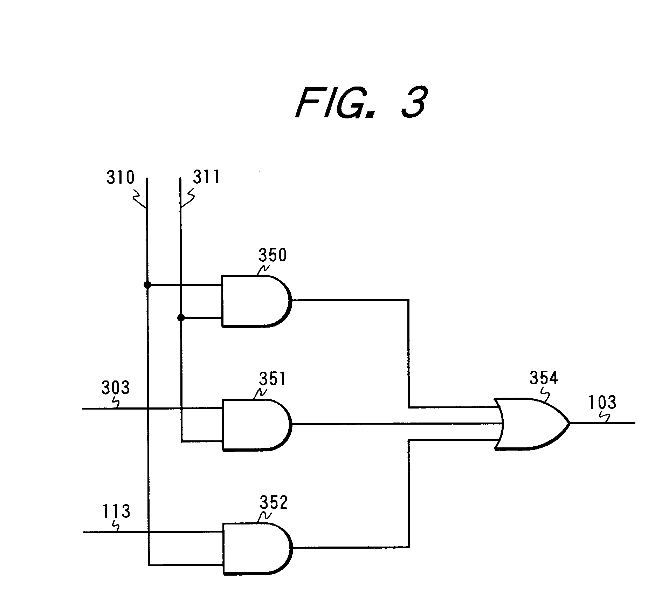

Figure 3 shows a logic circuit in the cache controller 32 for generating the cache bus ready signal 103. In the figure, reference numeral 350 denotes an AND gate to take AND between signals 310 and 311; reference numeral 351 designates an AND gate that takes AND between the signal 311 and the cache hit signal 303; reference numeral 352 signifies an AND gate that takes AND between the signal 310 and the internal bus ready signal 113; and reference numeral 354 denotes an OR gate that performs OR operation on the outputs of the AND gates 350, 351, 352 and sends its output as the cache bus ready signal 103. In the read cycle from the cache memory 31, the signal 310 is set low and the signal 311 is set high, and in this state the value of the signal 303 representing the hit information from the cache memory 31 is output from the OR gate 354 as the cache bus ready signal 103. When it is necessary to use the internal bus IB for the purpose of, say, reading from the internal bus IB, outputting write data, and outputting trace data, such as cache hit-related data put out only for tracing, the signal 310 is held high and the signal 311 is held low. In this state, the value of the internal bus ready signal 113 is output as the cache bus ready signal 103 from the OR gate 354. When none of the above accesses is performed, the signals 310 and 311 are both held high and the output of the AND gate 350 is raised to high level, holding the cache bus ready signal 103 to high level.

### ((External Bus Interface))

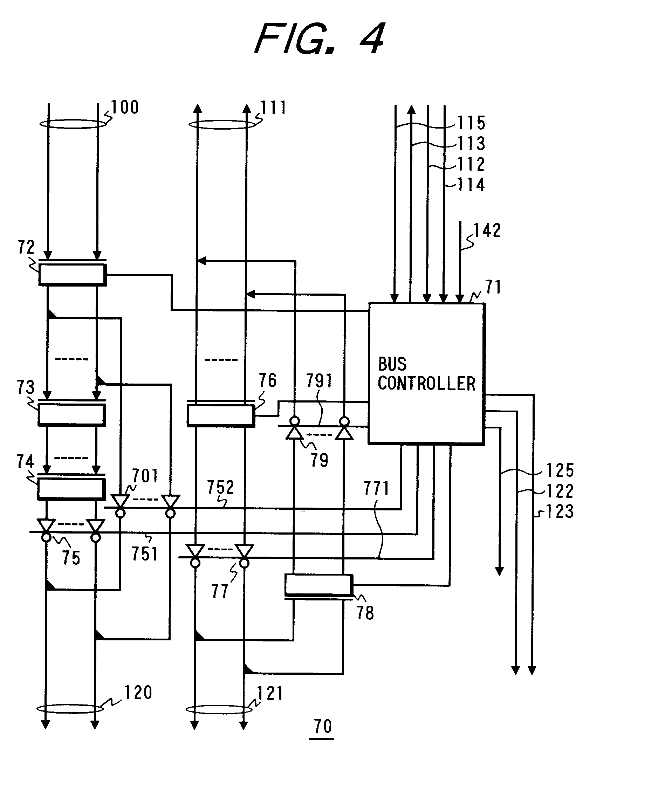

Figure 4 shows one example block diagram of the above-mentioned external bus interface 70. The external bus interface 70 shown in the figure comprises: registers 72-74 and three-state buffers 75, 701 disposed between the internal address bus 110 and the external address bus 120; registers 76, 78 and three-state buffers 77, 79 disposed between the internal data bus 111 and the external data bus 121; and a bus controller 71 that controls these and performs a start control on the bus cycle for external circuits.

On the internal bus IB, the bus controller 71 inputs an internal bus access signal 112, a cache trace signal 114 and an internal bus read/write signal 115, and outputs an internal bus ready signal 113. On the external bus side, the bus controller 71 outputs an external bus access signal 122, a trace start signal 123 and an external bus read/write signal 125. When in the debug mode the trace support function is selected and the signal 142 is high, the bus controller 71 performs the following controls to facilitate the retrieval of trace information, in addition to the normal bus control as performed in the product chip: (1) In response to the cache trace signal 114 becoming active, the bus controller 71 outputs access information such as cache hit-related data and address to the outside; (2) it outputs the trace start signal 123 - (second signal) to the outside to inform the timing when the outputs of a plurality of access information associated with the cache hit are parallelly established; (3) it outputs to the outside access information, such as access data and address for the circuit block connected to the peripheral bus PB which basically does not require the start of the external access cycle, and at the same time it outputs the trace start signal 123 (second signal) to the outside to inform the timing when the outputs of the plurality of access information are parallelly established; and (4) also when the external access cycle is theoretically required to be started, it outputs the trace start signal 123 (second signal) to the outside to inform the timing when the access information such as data and address for the external access are parallelly established outside. That is, for the convenience of tracing all the access information including those associated with cache hit, the bus controller 71 outputs the trace start signal 123 to the outside to indicate the timing when a plurality of access information, which the external bus interface 70 inputs and outputs in each bus cycle, are parallelly established outside. According to this embodiment, this timing is when the data are established on the external data bus 121. When the trace support function is not selected and the signal 142 is low, the output operation specially performed for tracing as described in (1) to (4) above is not performed.

In this external bus interface 70, the internal address bus 110 is connected to the external address bus 120 through the registers 72, 73, 74 and three-state buffer 75 and through register 72 and three-state buffer 701. Data on the internal data bus 111 is output to the external data bus 121 through register 76 and three-state buffer 77. Data on the external data bus 121 is taken into the internal data bus 111 through register 78 and three-stage buffer 79. The registers 72, 76 latch an input at the falling edge of the clock signal CLK and are controlled by the bus controller 71. The register 73 performs the latch operation at the rising edge of the clock signal CLK, and the register 74 performs the latch operation at the falling edge of the clock signal CLK. Hence, the address output through the three-state buffer 75 is given to the external address bus 120 at least 1.5 cycles of clock signal CLK after the address change on the internal address bus 110. On the other hand, the address output through the three-state buffer 701 is given to the external address bus 120 at least 0.5 cycles of clock signal CLK after address change on the internal address bus 110. The former of the two address output paths is used for normal external access and also for outputting to the outside the cache hit-related address together with data in one cycle of clock signal CLK. The latter address output path is used for normal external access to fix the address on the external address bus 120 prior to the fixing of data on the external data bus 121. When the bus controller 71 negates the internal bus ready signal 113 to instruct the cache controller 32 to maintain the internal bus control state for that period, it also prevents the latch operation of the registers 72, 76. For example, in Figure 7, when the access information associated with cache read hit is to be output to the external bus, 1.5 cycles are spent from time t at which the address on the internal address bus 110 changes to address A to time t4 at which the address on the external address bus 120 changes to address A. On the other hand, 2.5 cycles elapse from time t5 at which the address on the internal address bus 110 changes to address A + 4 to time t10 at which the address on the external address bus 120 changes to address A+4. This is the result of the internal bus ready signal 113 being negated for one cycle in cycle 4. In the write access for address B in Figure 7, because the internal bus ready signal 113 is negated in cycle 4, the output of the tristate buffer 701 is suppressed and the latch operation of the register 72 is also blocked, with the result that the write address B is output onto the external address bus 120 beginning with time t6, one cycle delayed from normal operation.

When the address on the internal address bus 110 is an address for external access (an address assigned to an external circuit) and when the internal bus access signal 112 is high, the bus controller 71 outputs the address onto the external address bus 120 through the register 72 and three-state buffer 701, as mentioned above. At the same time, the external bus access signal 122 is raised to high level to start the external access. When this access cycle is a write cycle, the bus controller 71 outputs the data that arrives one cycle after the address output onto the external data bus 121 through the register 76 and three-state buffer 77, as mentioned above. When this access cycle is a read access, the data on the external data bus 121 is latched temporarily by the register 78 and then taken into the internal data bus 111 through the three-state buffer 79. When the cache trace signal 114 is high, the bus controller 71 outputs the value on the internal address bus 110 onto the external address bus 120 through the registers 72, 73, 74 and three-state buffer 75. The data is output to the external data bus 121 by the same control as performed during the normal write operation. That is, the cache hit-related data and address are parallelly output to the external bus in one cycle of clock signal CLK, as described above. Further, when the signal 142 is high and when the bus controller 71 detects an access to the peripheral module connected to the peripheral bus PB by decoding the access address, it outputs information on the internal address bus 110 and internal data bus 111 onto the external address bus 120 and external data bus 121 in a way similar to the above.

Figure 5 shows an example logic circuit in the bus controller 71 to generate the trace start signal 123. A register 721 latches an input while the internal bus ready signal 113 is high and the clock signal CLK is low. A register 722 latches an input while the clock signal CLK is high. A register 724 latches an input while the clock signal CLK is low. Denoted 720 is an OR gate that outputs a result of OR operation on the cache trace signal 114 and the internal bus access signal 112. An AND gate 723 takes AND between the signal 710 and the output of the register 722. The ORed value of the internal bus access signal 112 and the cache trace signal 114 is taken into the register 721. The signal 710 may, for example, be a signal equivalent to the internal bus ready signal 113 in the debug mode with the trace support function selected (signal 14 is high).

When the cache trace signal 114 or internal bus access signal 112 is high and the internal bus ready signal 113 is high, the register 721 latches the high level in synchronism with the high-to-low transition of the clock signal CLK. One example latch timing is represented by L721 in Figure 7. In the next cycle of the clock signal CLK the next stage register 722 latches the latch data of the previous stage register 721 in synchronism with the leading edge of the clock signal CLK. L722 in Figure 7 is one example of such latch timing. The final stage latch circuit 724 latches the output of the AND gate 723 in synchronism with the trailing edge of the clock signal CLK of that cycle. L724 in Figure 7 is an example of such latch timing. The latch data of the register 724 is the output value of the register 722 if the signal 710 is high. If the internal bus ready signal 113 maintains its high level at the latch timing of the register 724, the signal 710 is set high, so that the final stage latch circuit 724 latches the high-level output data of the latch circuit 722 in synchronism with the trailing edge of the clock signal CLK. Thus latch period (one cycle of clock signal CLK) is the period when the trace start signal 123 is high. This conforms to the fact that when an internal bus access request or cache trace request is made, unless the internal bus ready signal 113 is negated to low level in that cycle or the succeeding cycle, the read data/write data is fixed on the external bus together with the address 1.5 cycles of clock signal CLK after the request. For example, in Figure 7, in cycle 2, a cycle of clock signal CLK in which the cache trace signal 114 and internal bus ready signal 113 are both high, the register 721 latches the high level in synchronism with the trailing edge of the clock signal CLK (time t2). In the next clock cycle, cycle 3, the next stage register 722 latches the latch data of the previous stage register 721 at time t3. Because in this cycle 3 the internal bus ready signal 113 remains high, the signal 710 is held high, causing the final latch circuit 724 to latch the high-level output data of the latch circuit 722 in synchronism with the trailing edge of the clock signal CLK in cycle 3. As a result, the trace start signal 123 is held high from time t4 to time t6. This latch period is the period when the address and data are fixed on the external bus.

On the other hand, if the internal bus ready signal 113 is low at the latch timing of the register 724, the signal 710 is held low, so that the final latch circuit 724 latches the low-level data irrespective of the latch data of the register 722 in synchronism with the trailing edge of the clock signal CLK of that cycle, causing the trace start signal 123 to go low. This state is maintained until the internal bus ready signal 113 goes high. During this period, the latch operation of the register 721 is also blocked and thus the register 721 retains the previously latched high-level data. After this, in response to the internal bus ready signal 113 going high, the signal 710 is held high causing the final stage latch circuit 724 to latch the high-level latch data of the latch circuit 722 in synchronism with the trailing edge of the clock signal CLK of that cycle. This latch period (one cycle of the clock signal CLK) is the period when the trace start signal 123 is high. This conforms to the fact that when an internal bus access request or cache trace request is made and if the internal bus ready signal 113 is negated to low level in that cycle or subsequent cycle, the fixing of data and address is delayed from the above-mentioned 1.5-clock-cycle- after-the-request by the length of time equal to the period during which the internal bus ready signal 113 is negated. For example, in Figure 7, in cycle 3, a cycle of clock signal CLK in which the internal bus access signal 112 and internal bus ready signal 113 are both high, the register 721 latches the high level in synchronism with the trailing edge of the clock signal CLK (time t4). In the next clock cycle, cycle 4, the next stage register 722 latches the latch data of the previous stage register 721 at time t5. When in this cycle 4 the signal 710 is held low in response to the internal bus ready signal 113 being set low, the final stage latch circuit 724 latches the low-level data irrespective of the latch data of the register 722 in synchronism with the trailing edge of the clock signal CLK (time t6) in cycle 4. As a result, the trace start signal 123 is held low at time t6. This state is maintained until the internal bus ready signal 113 is held high. Because the latch operation of the register 721 is prevented during that period, the register 721 retains the previously latched high-level data. Therefore, when the signal 710 is held high in response to the internal bus ready signal 113 being held high in cycle 5, the final stage latch circuit 724 latches the high-level latch data of the latch circuit 722 in synchronism with the trailing edge of the clock signal CLK in cycle 5, causing the trace start signal 123 to go high. This latch period coincides with the period in which the data and address are fixed on the external bus.

With the logic shown in Figure 5, it is possible to inform to the outside by the trace start signal 123 the period in which the address and data associated with cache hit and the address and data associated with external access are parallelly fixed on the external bus. For example, by using the high-level period of the trace start signal 123 as a memory enable signal for the trace memory on the outside, it is possible to accumulate these information chronologically.

In Figure 5, the signal 710 may also be implemented as a signal which is held high at an output timing determined by counting the clock signals CLK from the start of an access. That is, the signal 710 may be held high for one cycle at the following timing. In the case of an output of access information associated with the cache hit, the signal 710 is held high one cycle after the cache trace signal 114 and the internal bus ready signal 113 are both held high; and in the case of an external access and a built-in peripheral access, the signal 710 is held high in synchronism with the leading edge of the clock signal CLK which is one cycle before the access completion cycle. In the latter case, the number of access cycles for the external access and the built-in peripheral access is normally, though not limited to, two clock cycles. When a wait is inserted, the wait state is inserted after the first clock cycle. Therefore, even when the wait is inserted, it is possible to determine the instant which is one cycle before the access completion by monitoring the presence and absence of the corresponding wait state.

((Access Associated with Cache Read Mis-Hit in Normal Mode))

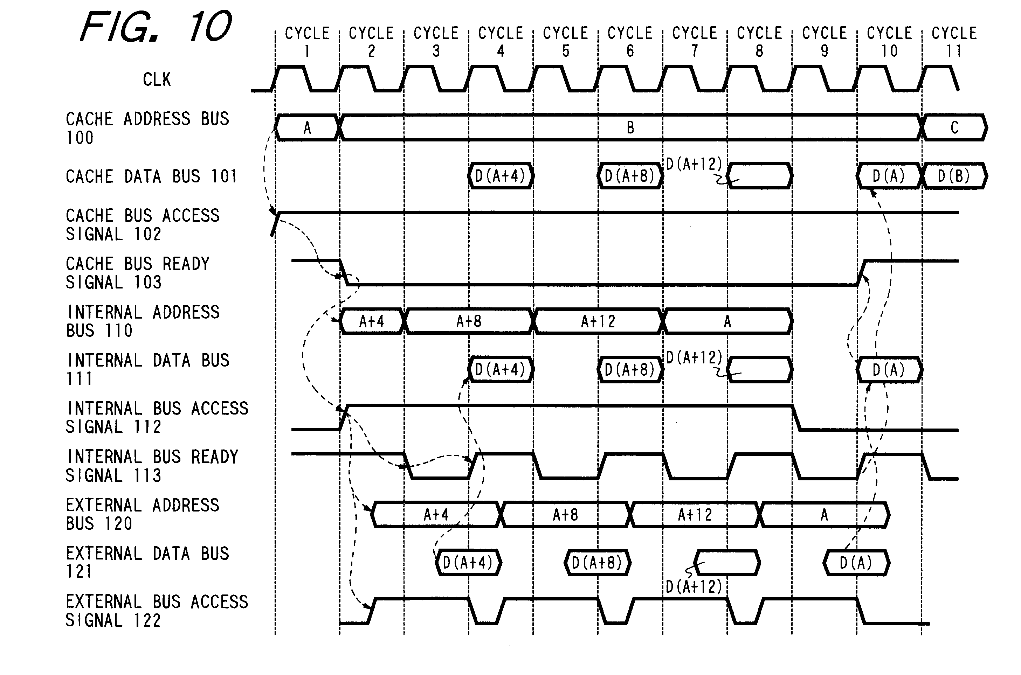

Figure 10 shows an example timing chart for an access associated with a cache read mis-hit in normal mode. The CPU 10 outputs the address A on the cache address bus 100 in cycle 1 and at the same time asserts the cache bus access signal 102 to high level to inform the cache controller 32 of the start of an access. At this time, if a read operation is specified by the cache bus read/write signal 105 output from the CPU 10, the cache controller 32 gives the read signal 301 to the cache memory 31 in the cycle 1 to search for an entry with the address A used as search information. If the search results in a cache mis-hit, the cache controller 32 negates the cache bus ready signal 103 to low level. The CPU 10 maintains the current access control state for the cache bus CB until the cache bus ready signal 103 is held high. To retrieve consecutive 16 bytes of data beginning with the address of the data associated with the cache mis-hit, the cache controller 32 holds high the internal bus access signal 112 in cycle 2 to make an access request to the bus controller 71 and at the same time outputs an address A + onto the internal address bus 110. The addition input data 361 of Figure 2 is used to get address A + 4 from address A. Upon receiving the access request, the bus controller 71 starts the external bus cycle for address A + 4 a half clock cycle after a change to high level of the internal bus access signal 112. Because the external bus cycle takes two clock cycles, the internal bus ready signal 113 is negated to low level in cycle 3, during which time the address A+8 on the internal address bus 110 is retained. Then, data D (A+4) is given to the internal data bus 111 in cycle 4 and the cache controller 32 takes in the four bytes of data. Similarly, the external bus cycles are started for the address A + 8, A+12 and A, and the corresponding data D (A + 8), D (A + 12), D (A) are taken into the cache memory 31. The data D (A), D (A+4), D (A+8), D (A+12) and their corresponding address tags are combined to form new cache entries. The final data D (A) is related to cache mis-hit, so that the cache controller 32 asserts the cache bus ready signal 103 to high level so that the CPU 10 can fetch the data. The access addresses A+4, A+8, A+₁2 are generated inside the register 36 by the addition input data 361 and the address A.

((Cache Read Hit and Write Access in Normal Mode))

Figure 6 shows one example timing chart for cache read hit (access for address A, A + 4, A + 8) and write access (access for address B, C) in normal mode. In normal mode, when accessing data or instructions on memory, the CPU 10 outputs an access address on the cache address bus 100 in synchronism with the clock signal CLK and holds the cache bus access signal 102 high to make an access request to the cache memory device 30. Cycle 1, 3 5 in Figure 6 are such operation cycles. Upon receiving such an access request, the cache memory device 30 searches through the cache memory 31 in that cycle. When the access is a read access to memory and data for that access address exists in the cache memory 31, the cache memory device 30 outputs the data read from the cache memory 31 onto the cache data bus 101 in synchronism with the clock signal CLK in the next cycle and further asserts the cache bus ready signal 103 to high level. The CPU 10 recognizes by the high-level cache bus ready signal 103 that the data requested is available on the cache data bus 101.

When the CPU 10 makes a write access, the CPU 10 outputs, in cycle 2 for instance, an address B onto the cache address bus 100 and at the same time asserts the cache bus access signal 102 to high level to notify the cache controller 32 of the start of an access. At this time, if the write operation is specified by the cache bus read/write signal 105 output from the CPU 10, the cache controller 32 gives the read signal 301 to the cache memory 31 in this cycle 2 to search for an entry with the address B used as search information. If the search results in a cache mis-hit, the cache controller 32 selects a cache line to be replaced in the next cycle 3 and adds the data D (B) as a new entry. In the event of a cache hit, the cache controller 32 adds the write data D (B) to the cache line indexed in cycle 2. The cache memory device 30 performs a write-through control for the write access and therefore performs an external write operation on external memory such as main memory whether the access results in a cache hit or mis-hit. Thus, when it receives a write access request from the CPU, the cache controller 32 requests an internal bus access by the internal bus access signal 112. Take the write access for address B for example. In cycle 3, the cache controller 32 asserts the internal bus access signal 112 to high level to make an internal bus access request to the bus controller 71. The bus controller 71, upon receipt of the request, writes data D (B) at the address B. In such an external write access, because the CPU 10 does not need the result of the write operation completion, i.e., does not have to wait for the completion of the data write, the cache controller 32 does not negate the cache bus ready signal 103 to low level for this write access.

When accessing peripheral modules connected to the peripheral bus PB, such as serial interface 80, timer 81 and watchdog timer 82, the address- which is output from the cache address bus 100 through the cache memory device 30 onto the internal address bus 110-is used as the address of these peripheral modules. This address is output to the peripheral address bus 130 through the peripheral bus interface 60, and at the same time the peripheral bus access signal 132 is asserted to high level. After the read data is output from the peripheral modules to the peripheral data bus 131 or after the value on the peripheral data bus 131 is written into the peripheral modules, the external bus interface 70 holds the internal bus ready signal 113 high to inform the completion of the access. In the case of a data read cycle, the peripheral bus interface 60 outputs the read data on the peripheral data bus 131 onto the internal data bus 111.

((Cache Read Hit and Write Access When Trace Support Function Is Selected in Debug Mode))

Figure 7 shows one example timing chart for the cache read hit and write access when the trace support function is selected in the debug mode. In this operation mode, in the event of a cache hit the cache memory device 30 outputs the address A on the cache address bus 100 onto the internal address bus 110 and holds the cache trace signal 114 high, as in the case of the access to address A. At this time, the CPU 10 asserts the cache bus ready signal 103 to high level and in the next cycle outputs the data D (A) read out from the cache memory 31 onto the internal data bus 111 following the output of the address. At the same time, an address B for the next write access is output onto the internal address bus 110. In the write access, the cache trace signal 114 is held low and the internal bus access signal 112 is held high. The address A and data D (A), objects to be traced, are parallelly output to the external address bus 120 and at the same time the trace start signal (TS signal) 123 is held high. In cycle 3, because the output of trace data A, D (A) is not yet completed, the write operation for address B cannot be started and thus in the next cycle 4 the internal bus ready signal 113 is held low. When the internal bus ready signal 113 is low, the values of the internal address bus 110, internal data bus 111, internal bus access signal 112 and cache trace signal 114, all output from the cache memory device 30, remain as they were in the previous cycle. From the midway in the cycle 4, the write operation for address B is started, and in the next cycle the internal bus ready signal 113 and the cache bus ready signal 103 are asserted to high level. The trace start signal 123 is made active in synchronism with the data output, whether in the access for address B, which is a normal write cycle, or in the event of a cache mis-hit. The timing of the active level in this case is, as explained by referring to Figure 5, the final cycle of that access.

### ((Status Transition Control in Cache Controller))

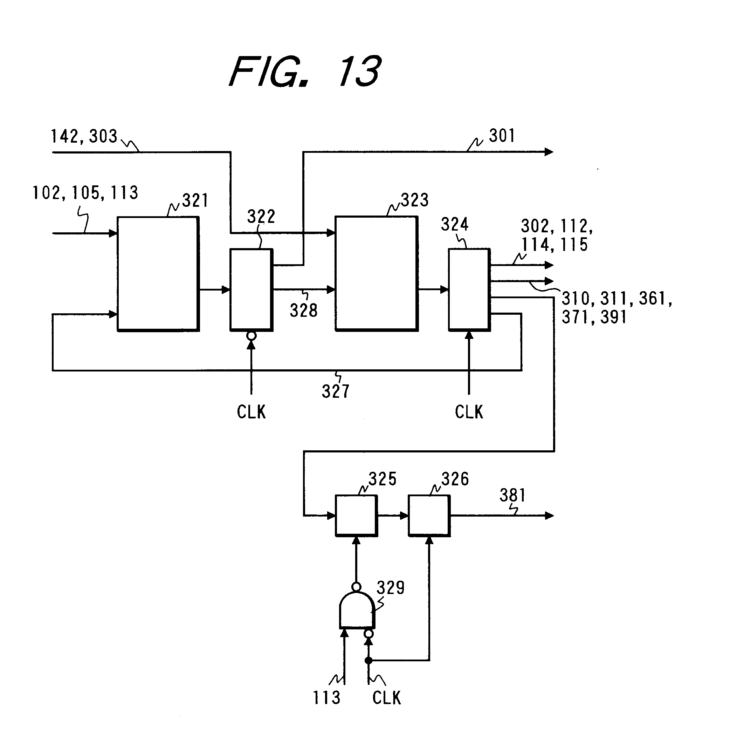

Figure 13 shows another control logic of the cache controller 32. This is a logic circuit to generate a variety of control signals by using the status transition control. The logic circuit comprises a first combined circuit 321, a latch 322, a second combined circuit 323 and a latch 324, all these making up a loop as a main constituent, and also latches 325, 326 and an AND gate 329. In the figure, reference numbers 371, 381, 391 represent control signals for three-state buffers 37, 38, 39. These control signals, when they are high, allow the corresponding buffers to perform an output operation and, when low, bring them into a high output impedance state. In Figure 13, designated 327 is a first status signal made up of a plurality of bits fed back from the latch 324 to the first combined circuit 321. Denoted 328 is a second status signal made up of a plurality of bits supplied from the latch 322 to the second combined circuit 323.

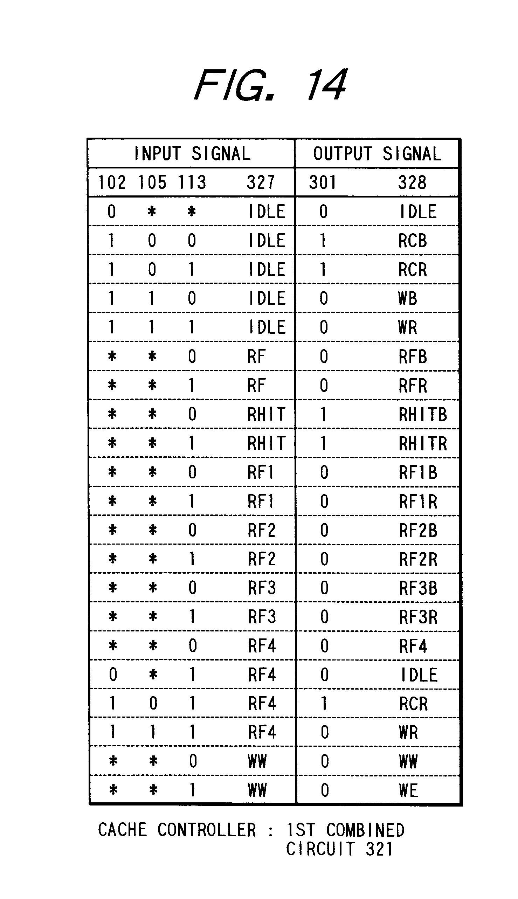

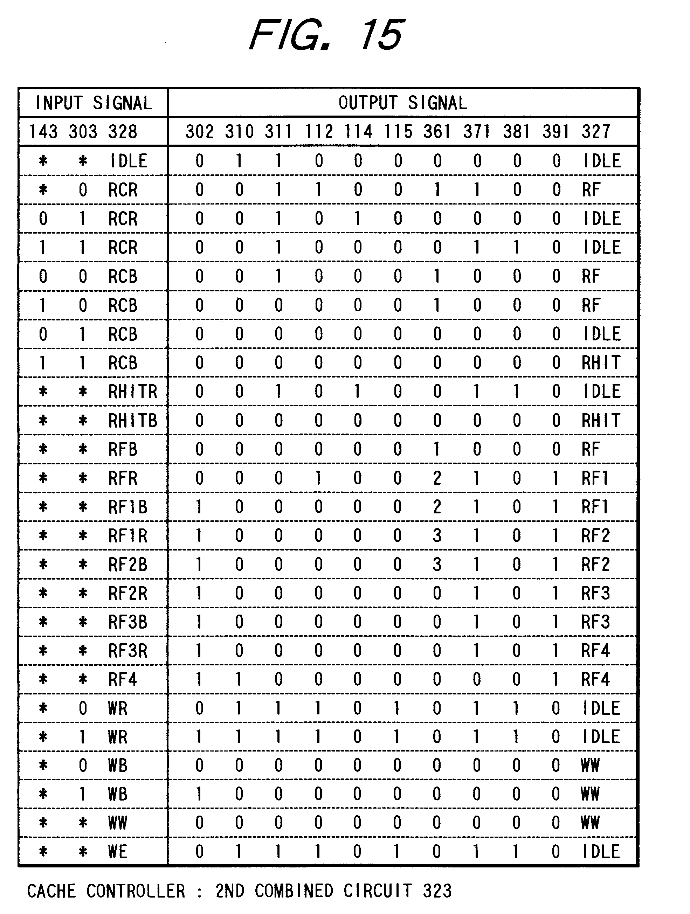

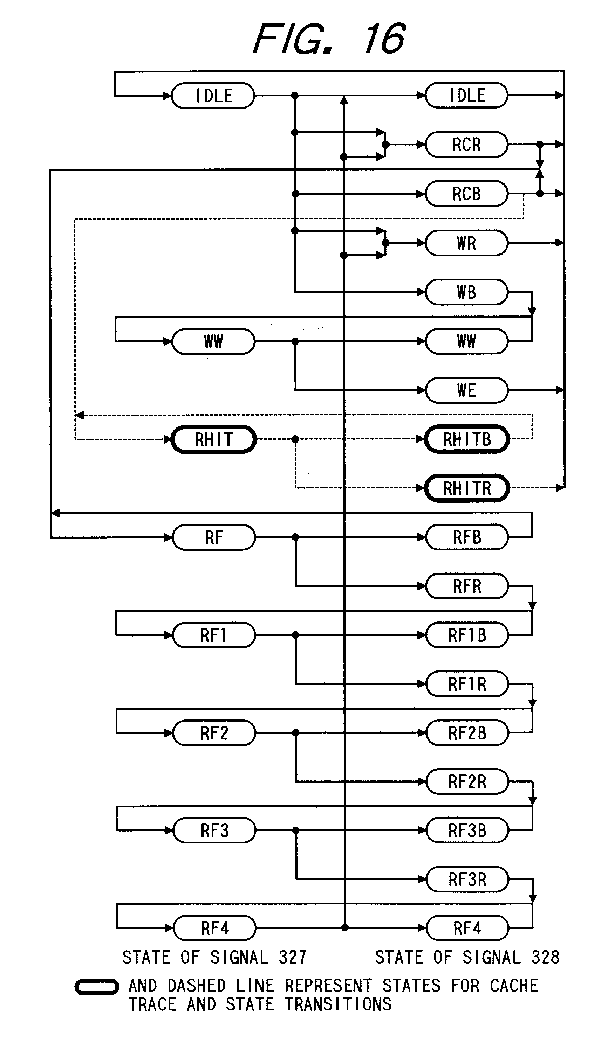

Figure 14 shows a truth table for the first combined circuit 321 and Figure 15 a truth table for the second combined circuit 323. There are eight states to be represented by the first status signal 327, which has three bits. Nineteen states are represented by the second status signal 328, which has five bits. Symbols representing respective states have the following meanings. A symbol ^{*} in the input signal in the truth table signifies an arbitrary value (don't-care marking). Figure 16 shows a state transition diagram as represented by the status signals 327, 328 in the above truth tables.
IDLE: Idle cycle
RCR: Cache read (in the event of cache hit, trace information is output)
RCB: Cache read
WR, WB: Write cache check
WW: Write internal bus wait
WE: Write internal bus completion
RHIT, RHITB: Trace information output wait
RHITR: Trace information output completion
RF: Cache mis-hit first address output
RF1: Cache mis-hit first data wait
RF2: Cache mis-hit second data wait
RF3: Cache mis-hit third data wait
RF4: Cache mis-hit fourth data wait

### ((State Transition Control in Bus Controller))

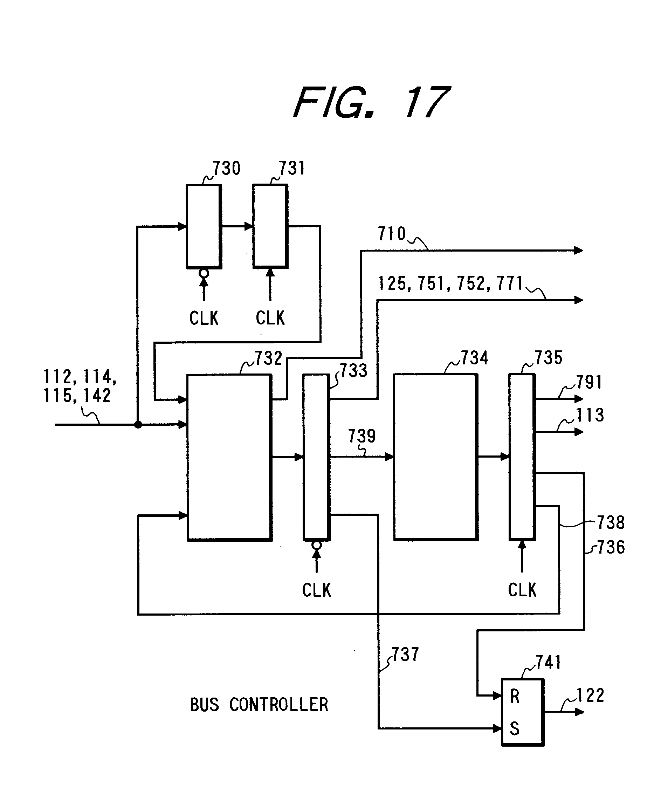

Figure 17 shows another control logic of the bus controller 71. This is a logic circuit to generate a variety of control signals by using the status transition control. The logic circuit comprises a first combined circuit 732, a latch 733, a second combined circuit 734 and a latch 735, all these making up a loop as a main constituent, and also latches 730, 731 and an RS flip-flop 741. In the figure, reference numbers 751, 752, 771, 791 represent control signals for three-state buffers 75, 701, 77, 79. These control signals, when they are high, allow the corresponding buffers to perform an output operation and, when low, bring them into a high output impedance state. Designated 738 is a first status signal made up of a plurality of bits fed back from the latch 735 to the first combined circuit 732. Denoted 739 is a second status signal made up of a plurality of bits supplied from the latch 733 to the second combined circuit 734.

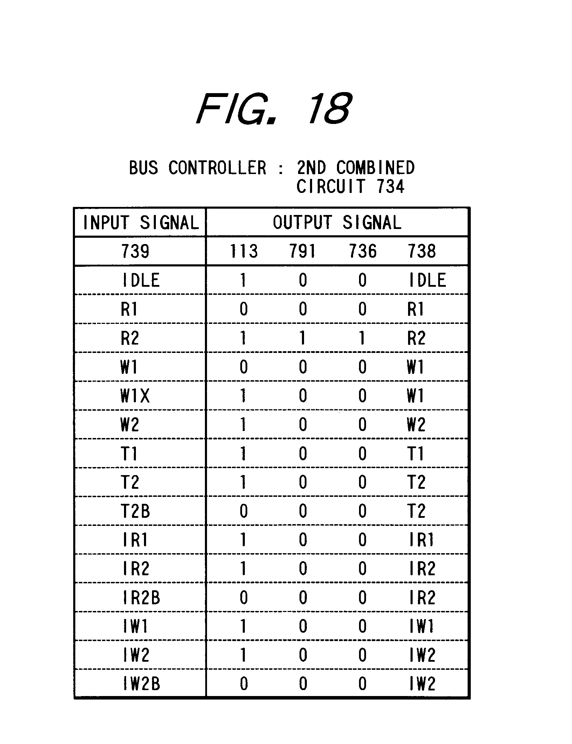

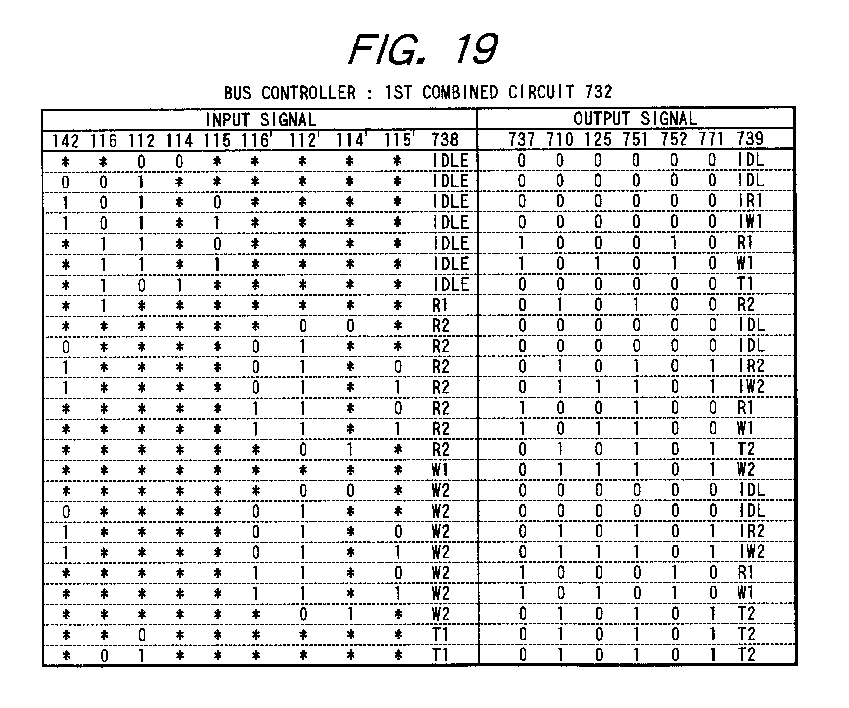

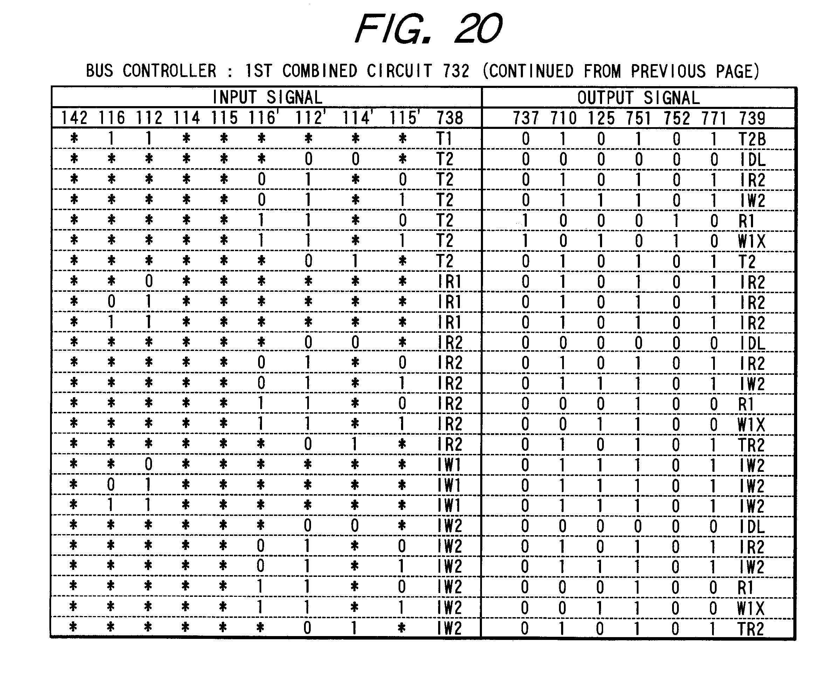

Figure 18 shows a truth table for the second combined circuit 734 and Figure 19 and 20 truth tables for the first combined circuit 732. Eleven states are represented by the first status signal 738, and fourteen states are represented by the second status signal 739. These status signals each have four bits. Symbols representing respective states have the following meanings.
IDLE: Idle cycle
R1: External read 1 st cycle
R2: External read 2nd cycle
W1: External write 1 st cycle
W2: External write 2nd cycle
T1: Matching of trace information output timing
T2: Trace information output
IR1: Matching of built-in peripheral read timing
IR2: Built-in peripheral read information output
IW1: Matching of built-in peripheral write timing
IW2: Built-in peripheral write information output

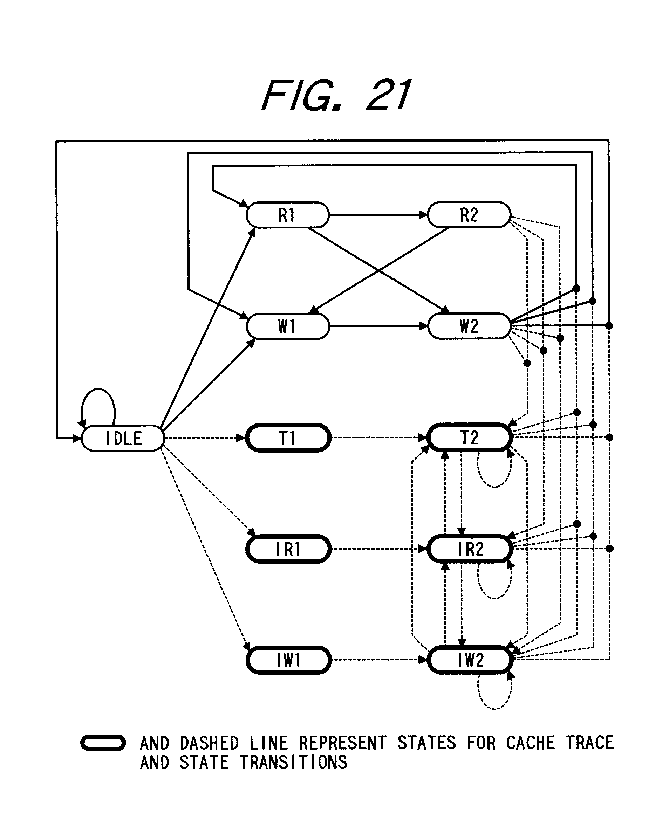

In Figure 19 and 20, signals marked with a symbol ' correspond to unmarked signals and are delayed by the latches 730, 731. Figure 21 is a diagram showing the transition of state as represented by the status signal 738 of the above truth table. A symbol ^{*} in the input signal in the truth table signifies an arbitrary value (don't-care marking). In Figure 18 and 19, states other than IDLE, R1, R2, W1 and W2 represented by the status signal 738 are those corresponding to the trace support function.

### ((Trace Circuit))

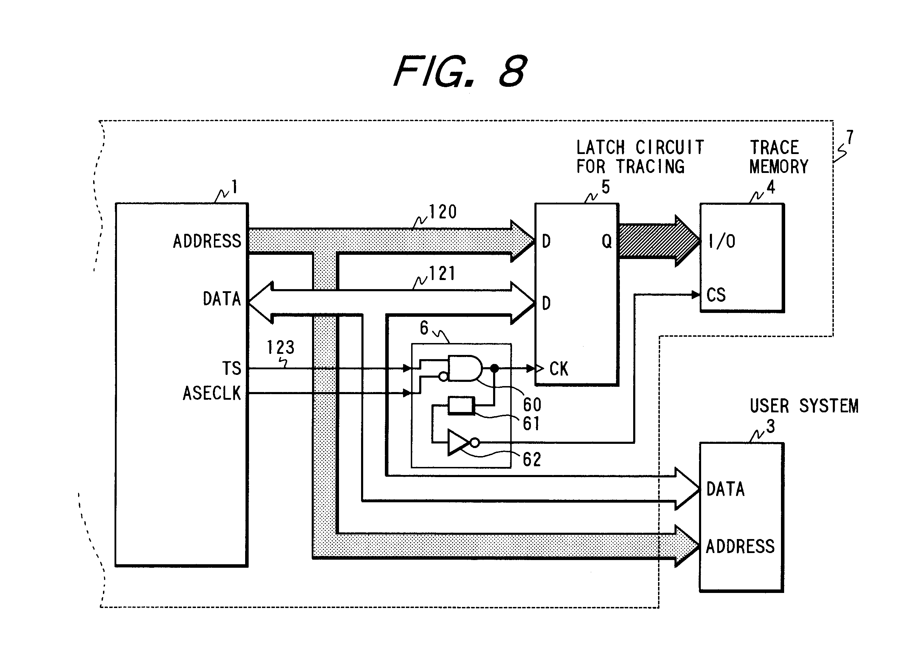

Figure 8 shows one example of a trace circuit that performs tracing by using the trace start signal 123 (TS) output from the microcomputer 1 of the above embodiment. In the figure, denoted 7 is what constitutes a part of an emulator, and a user system 3 is a target system to be emulated. In this configuration, the microcomputer 1 is set to a debug mode to work as an evaluation chip and has data of logic 1 written into the register 90 to select the trace support function. This microcomputer 1 executes a user program (target program), which is to be debugged, to substitute-control the user system 3. A trace memory 4 stores information appearing on the address bus 120 and data bus 121 during the course of the substitute control. As a means to generate timing for performing a write control on the trace memory 4, a trace latch circuit 5 and a trace control circuit 6 are provided.

In the embodiment shown in Figure 8, a plurality of data input terminals D of the trace latch circuit 5 are parallelly connected to the address bus 120 and the data bus 121 and a plurality of output terminals Q are connected to a data input terminal I/O of the trace memory 4. An access address generating means of the trace memory 4, though not shown, should be understood to include an address counter not shown, which updates the access address and feeds it to the trace memory 4 each time the chip selection is made by a chip selection signal CS, which is active when low. The trace control circuit 6, in response to the trace start signal 123 and the clock signal ASECLK, generates the chip selection signal CS and a latch pulse CK for the trace latch circuit 5. The clock signal ASECLK is a clock signal output to the outside from a clock pulse generator 2 of the microcomputer 1 and has the same frequency as the internal clock signal CLK of the microcomputer 1 but is delayed about 1/4 cycles. The latch pulse CK is generated by an AND gate 60 that takes AND between the trace start signal 123 and an inverted level of the clock signal ASECLK. The chip selection signal CS, which is active when low, is generated by delaying the latch pulse CK and inverting it by an inverter 62.

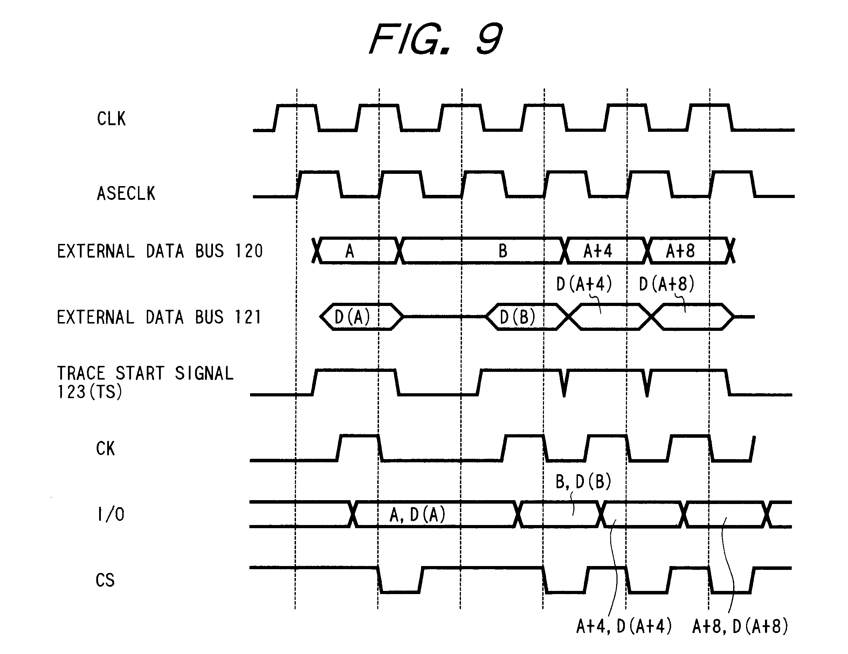

Figure 9 shows a timing chart of a trace operation performed by the trace circuit of Figure 8. The trace start signal 123 output from the microcomputer 1 is asserted to high level at a predetermined timing when the address and data are parallelly established on the address bus 120 and data bus 121 in each bus cycle. Because this high-level period of the trace start signal 123 is one cycle of clock signal CLK and because the trace start signal 123 is output from the AND gate 60 as the latch pulse CK while the clock signal ASECLK-which is about 1/4 cycles delayed from the clock signal CLK-is low, the trace latch circuit 5 that performs the latch operation at the rising edge of the latch pulse CK can latch in each bus cycle the information appearing on the address bus 120 and data bus 121. When the chip selection signal CS is set to the chip selection level at a timing slightly delayed from the latch pulse CK, the trace memory 4 is enabled for tracing in each external bus cycle of the microcomputer 1.

The break controller 20 shown in Figure 1 is provided to strengthen the debug function and checks if the states of the cache bus CB and internal bus IB meet the break condition and, if so, generates a break interrupt to the CPU 10. The CPU 10, before starting debugging or emulation, executes their service routine to set desired break conditions for address and data beforehand so that the service routine for debugging can be triggered by a break interrupt. This eliminates the need for the break control of cache hit-related information and of other information transferred to and from the built-in peripheral modules to be performed outside the microcomputer 1. This in turn facilitates the debugging and system evaluation. In the microcomputer of this embodiment that can select the debug mode, though not shown, the break controller 20 is enabled in the debug mode.

The above embodiment has the following advantages.
[1] ] In the debug mode, when the trace support function is selected, the cache controller 32 gives access information such as cache hit-related address and data to the external bus interface 70 and the bus controller 71 outputs to the outside the trace start signal 123 to indicate, in synchronism with the output to the outside of the plurality of cache hit-related access information, the timing when the plurality of access information are parallelly established. This allows the access information associated with cache hit in the cache memory device 30 incorporated in the microcomputer 1 to be traced outside. The trace timing can be easily recognized outside by the use of the trace start signal 123.
[2] In the debug mode, when the trace support function is selected, the bus controller 71 allows the access information for the peripheral modules connected to the peripheral bus PB to be output to the outside. At the same time, in synchronism with the output to the outside of these access information, the bus controller 71 outputs to the outside the trace start signal 123 that informs, in each bus cycle, the timing when the plurality of access information are parallelly established. Because of this, it is possible to trace, outside the microcomputer, the access information for the peripheral modules built into the microcomputer 1 and to easily recognize the trace timing outside.
[3] In the debug mode, when the trace support function is selected, because in cases other than [1] and [2], too, the bus controller 71 outputs to the outside the trace start signal 123 that informs, in each bus cycle, the timing when the access information, such as address and data associated with external read and write operations performed via the internal bus IB, are parallelly established, it is possible to easily recognize by a single trace start signal 123 the trace timings for all information that are to be traced outside. This facilitates the tracing even if the microcomputer is provided with expanded and enhanced functions, thus assuring an improved debug environment.
[4] In tracing a program which executes instructions stored in the cache memory device or performs data processing using data in the cache memory device, the above-mentioned features obviate the need to disable the use of cache or successively disable individual contents taken into the cache while running the program. This improves the efficiency of debugging or system evaluation.
[5] Because the debug mode can be selectively set, the microcomputer of this embodiment can serve both as an evaluation chip for debugging and evaluation and as a product chip.
[6] In the trace circuit using the microcomputer 1 of this embodiment, the timing generating means for generating a trace timing for the trace memory 4-which is represented by the trace latch circuit 5 and the trace control circuit 6-can easily be formed by referencing one kind of strobe signal such as the trace start signal 123 output from the microcomputer 1. The trace circuit requires no complex circuit as required by the conventional one which generates the trace timing by referencing a variety of strobe signals according to the kind of bus access, thus significantly alleviating the burden of user accompanied by debugging of microcomputer software and application systems.

The present invention has been described in conjunction with embodiments. It is noted that the invention is not limited to these embodiments but that various modifications may be made without departing from the spirit of the invention. The logic circuits explained by referring to Figure 3 and 5 can be modified as necessary. Similarly, the logic configuration of the trace control circuit 6 in Figure 8 may also be changed. Further, the information output to the outside only for tracing need not contain all access information but may include only address or data, as required.

While the foregoing description concerns a case where this invention is applied to a microcomputer serving as both an evaluation chip and a product chip, an application field from which the invention has originated, it is possible to implement the invention as a data processor dedicated for evaluation only. In this specification, the data processor includes a wide range of data processing devices that have a central processing unit and perform data processing, such as microprocessors, single-chip microcomputers and digital signal processors.

Representative advantages and features of this invention may be briefly summarized as follows.
[1] The access information related to cache hit in the cache memory device incorporated in the data processor can be output to the outside.
[2] This allows tracing to be performed without slowing down the execution speed at time of cache access.
[3] The trace timing for a plurality of access information associated with cache hit can be easily recognized outside by the use of a second signal.
[4] The trace timing for various access information that the external bus interface inputs and outputs at time of cache mis-hit, write access and built-in peripheral circuit access, too, can be easily recognized by the single second signal.
[5] In applications where various output functions to facilitate tracing, such as output to the outside of access information associated with cache hit and of the second signal, may temporarily become an impediment to system debugging or program debugging, the mode setting means allows these output functions to be appropriately utilized. Further, the mode of use of the data processor chip can be switched between an evaluation chip for emulation and a product chip.
[6] The use of the second signal simplifies the configuration of the timing generation circuit for tracing.

## Claims

1. A data processor formed on a single chip comprising:
a central processing unit (10);
a cache memory device (30) connected to the central processing unit (10); and
a bus controller (71) which, in the event of a cache hit in the cache memory device (30), outputs to the outside of the data processor (10) a signal (123) representing a timing when a plurality of access information associated with the cache hit are established in parallel outside the data processor (10).

2. The data processor of claim 1, wherein the access information includes address information to be supplied from the central processing unit (10) to the cache memory device (30).

3. A trace circuit comprising:
a bus (120, 121);
a trace memory (4) connected to the bus (120, 121);
a data processor (1) according to claim 1 or 2, connected to the bus (120, 121), and
a timing generation circuit (5, 6) which, in response to the signal from the data processor (1), instructs the trace memory (4) to store information from the bus (120, 121).

4. A data processor formed on a single chip comprising
a central processing unit (10);
a cache memory device (30) connected to the central processing unit (10); and
an external bus interface (70) connected to the cache memory device (30);
wherein the cache memory device (30) includes a cache controller (32) which supplies to the external bus interface (70) a first signal (114) that causes a plurality of access information associated with a cache hit in the cache memory device (30) to be output to the outside; and
wherein the external bus interface (70) includes a bus controller (71) which outputs to the outside a second signal (123) representing a timing when external outputs of a plurality of access information associated with the cache hit and specified by the first signal (114) are established in parallel.

5. The data processor of claim 4, wherein the bus controller (71) further outputs the second signal (123) to the outside also at a timing when a plurality of access information that it must input and output, as well as the access information associated with the cache hit, are established in parallel outside.

6. The data processor of claim 4, wherein the bus controller (71) outputs to the outside a plurality of access information that are used when accessing a built-in circuit module incorporated in the data processor.

7. The data processor of claim 6, further comprising a mode setting means which generates a third signal (142) to selectively inhibit external output of the plurality of access information associated with the cache hit and external output of the plurality of access information used when accessing the built-in circuit module.

8. The data processor of claim 7, wherein when an external signal (143) is set to a first state, the mode setting means decides whether or not to inhibit the external output of the access information according to data set by memory means (90) accessible by the central processing unit (10).

9. The data processor of claim 8, wherein when the external signal (143) is in the first state, the mode setting means sets the external bus interface (70) to a debug mode to make the data processor conform to an evaluation chip for emulation and, when the external signal (143) is in a state other than the first state, sets the external bus interface (70) to a normal mode to make the data processor conform to a product chip.

10. A data processor formed on a single chip, comprising:
a central processing unit (10);
a cache memory device (30) connected to the central processing unit (10) through a cache bus (CB); and
an external bus interface (70) connected to the cache memory device (30) through an internal bus (IB);
wherein the central processing unit (10) gives a cache bus access signal (102) representing an access-through-the-cache-bus request to the cache memory device (30); the cache memory device, in response to its access request, gives to the central processing unit (10) a cache bus ready signal (103) representing the output of read data or input of write data, and also gives to the external bus interface (70) an internal bus access signal (112) or a first signal (114) representing an access-through-the-internal-bus request; and the external bus interface (70), in response to its access request, gives to the cache memory device (30) an internal bus ready signal (113) representing the output of read data or input of write data;
wherein when the access request represented by the cache bus access signal (102) results in a cache hit, the cache memory device (30) gives the first signal (114) to the external bus interface (70) to request the external output of cache hit-related access address and data; and the external bus interface (70) outputs to the outside a second signal (123) which commonly represents a timing when external outputs of the cache hit-related access address and data specified by the first signal (114) are established in parallel and also a timing when external outputs of access address and data associated with other access requests specified by the internal bus access signal (112) are established in parallel.

11. A trace circuit comprising:
a data processor (1) according to claim 10, an external bus (120, 121) connected to an external bus interface (70) of the data processor (1);
a trace memory (4) to store information appearing on the external bus (120, 121); and
a timing generation means (5, 6) to store access information appearing on the external bus (120, 121) into the trace memory (4) in each bus cycle in response to a second signal output from the data processor (1).
